# EUROPEAN PATENT APPLICATION

(11) **EP 4 209 982 A1**
(43) Date of publication of application: **12.07.2023**
(21) Application number: 21863503.5
(22) Date of filing: 17.08.2021
(51) Int. Cl.: G06Q 20/38

(54) **SMART CONTRACT METHOD FOR BLOCKCHAIN, AND ELECTRONIC DEVICE, SYSTEM AND COMPUTER-READABLE STORAGE MEDIUM**

(30) Priority: 04.09.2020 CN 202010920884
(71) Applicant: Xu, Hao, Wuhu, Anhui 241000 (CN)
(72) Inventor: Xu, Hao, Wuhu, Anhui 241000 (CN)
(74) Representative: Ipey
(86) International application number: PCT/CN2021/112991
(87) International publication number: WO 2022/048436

(57) **Abstract**

A smart contract method for a blockchain, the method comprising: S1, a node receiving a smart transaction submitted by a user or a block transmitted by another node, wherein the block contains the smart transaction; S2, the node executing all smart contract calls in the smart transaction, and a smart contract adding an input item to the transaction; S3, the node verifying the legitimacy of the smart transaction, which involves verifying the integrity of the transaction after the execution of all the smart contract calls ends; and S4, if a verification result is that the transaction is legitimate, accepting the smart transaction, otherwise, rejecting the smart transaction. A smart transaction is a transaction containing smart contract calls, and the smart transaction can define a user expectation in an output item of the transaction, such that a smart contract provides a suitable input to satisfy a result that a user wants. A miner verifies whether the input provided by the smart contract satisfies the result that the user wants. In the sense of contract law, this is equivalent to verifying whether the intentions of two parties are consistent with each other. Only a transaction that passes verification can be accepted by a blockchain.

## Description

### TECHNICAL FIELD

The present invention is related to the field of blockchain technologies. Specifically, the present invention is related to a blockchain smart contract method, electronic device, system and computer-readable storage medium.

### BACKGROUND

Smart contracts are computer protocols for propagation, validation, or execution of contracts by means of information technologies. Smart contracts permit trust-worthy transactions without involvement of a third party. These transactions are traceable and irreversible. Not only blockchain technology could support programmable contracts, it provides the benefits of decentralism, tamper-resistance, transparency and traceability. It is naturally fit for smart contracts. Ethereum is the first blockchain that supports smart contracts.

Blockchain smart contracts are programs and data deployed on blockchain. Users invoke executions of smart contract programs by sending transactions containing calls of smart contracts to blockchain nodes (miners).

A miner executes the called smart contract program after receiving a transaction. If the smart contract program returns with a result of success, the miner packs the transaction into a block. Other than providing calling parameters, the user who sends the transaction has no control over result of smart contract execution. There might be errors in the smart contract deployed by the contract developer. There may even be malicious codes. The caller must accept the result even if it does not meet the caller's expectation either due to misunderstanding about the smart contract, errors or malicious codes in the smart contract. Once the smart contract executes successfully, the caller is unable to stop miners from adding it to a block and becoming a part of blockchain records, which is neither modifiable and nor reversible.

### SUMMARY

The present invention provides a blockchain smart contract method, aimed to solve the technical problems described above.

The present invention is implemented as a blockchain smart contract method including the following steps:
S1. A node receives a smart transaction submitted by users or a block transmitted by another node, and the block consists of smart transactions.
S2. The node executes all the calls of smart contracts in a smart transaction. A called smart contract adds an input item to the transaction.
S3. The node validates legitimacy of the smart transaction. Validation of the transaction comprises a step verifying integrity of the transaction after all the calls of the smart contracts have finished execution.
S4. If the validation result confirms that the smart transaction is legitimate, the smart contract transaction is accepted; otherwise rejected

A smart transaction is a transaction comprising calls of smart contracts. User expectations may be defined in outputs of a smart transaction.

If the smart transaction is the transaction submitted by the user, accepting the smart transaction means to pack the transaction into current block, and rejecting the smart transaction means to discard the smart transaction.

If the smart transaction is a transaction in the block transmitted by another node, rejecting the smart transaction means not to add the block into blockchain.

Further, the node invokes a virtual machine to interpret and execute smart contract programs. The instruction set of the virtual machine includes spending instruction. Interpretation and execution of the spending instruction by the virtual machine comprises a step to add an input item to the group of inputs of the smart instruction.

Further, the instruction set of the virtual machine includes at least one of the following instructions: delivery instruction or mint instruction.

Interpretation and execution of the delivery instruction by the virtual machine comprises a step to add an output item to the group of outputs of the smart transaction.

Interpretation and execution of the mint instruction by the virtual machine comprises a step to add an output item to the group of outputs of the coinbase transaction of the current block.

Further, the script of an output item avbove is another call of a smart contract.

Further, during execution of a delivery instruction, the virtual machine adds an output item contained in data of the delivery instruction to the group of outputs of the smart transaction.

Further, in execution of a mint instruction, the output item added to the coinbase transaction consists of a token contained in the data of the mint instruction.

Further, the method for interpretation and execution of the spending instruction consists of the following steps:
The virtual machine verifies that the input item that is contained in data of the spending instruction is owned by the smart contract. Only when the verification result is affirmative, the input item is added to the group of inputs of the smart transaction.

The present invention is implemented as a blockchain system, characterized in that the system consists of several nodes and several terminals. A terminal sends a smart transaction to a node. A node sends a block to another node. Nodes execute a blockchain smart contract method above when they receive a smart transaction or a block.

The present invention is implemented as an electronic device comprising storage medium, processor, and computer program stored in the storage medium and executable by the processor. A blockchain smart contract method above is implemented when the processor executes the program.

The present invention is implemented as computer-readable storage medium in which a computer program is stored, and when the computer program is executed by a processor, a blockchain smart contract method described above is implemented.

Smart contracts fulfill user expectations by providing appropriate inputs. Miners validate whether the inputs provided by smart contracts match user expectations. It is equivalent to verifying whether two parties' minds meet. Only validated transactions are accepted by the blockchain. Thus, smart contracts implemented using the methods of the present invention meet legal definition of contract better. It will reject the results of smart contract executions that do not meet user expectations.

### BRIEF DESCRIPTION OF THE DRAWINGS

FIG. 1 is a diagram that illustrates structure of a blockchain system, according to an embodiment.
FIG. 2 illustrates a flow diagram of a blockchain smart contract method according to an embodiment.

### DETAILED DESCRIPTION

Many embodiments could be constructed according to principles the present invention. Embodiments of the present invention will be described clearly and in entirety in further detail below with reference to the attached figures. Obviously, the embodiments described are only some, but not all, embodiments of the present invention. Based on the embodiments or principles of the present invention, technicians in the field may construct other embodiments without creative work, which are protected within the scope of the present invention.

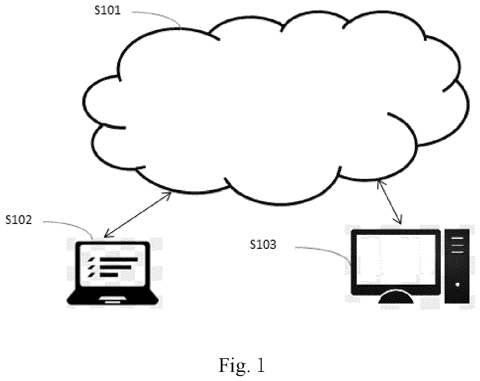

FIG. 1 is a blockchain system consisting of one or more network terminals (S102) connected to the Internet (S101) and one or more blockchain nodes (S103) connected to the Internet (S101). The network terminals (S102) construct transactions according to user inputs, and send transactions to the blockchain nodes (S103) through the Internet (S101). Each blockchain node (S103) can receive transactions from the network terminals (S102) and blocks from other blockchain nodes (S103). A transaction consists of a group of inputs and a group of outputs. Each output of a transaction comprises a token. Tokens are representations of values. In some embodiments, UTXO are used in ledgers wherein each input of a transaction comprises a reference to output of another transaction. In some other blockchain embodiments, accounts are used in ledgers wherein each input of a transaction comprises a token and an address. After having received a transaction, the nodes (S103) validate legitimacy of the received transaction, including verifing whether that inputs of the transaction are unspent tokens in the blockchain; and whether the transaction has appropriate authorization. For embodiments that use the unspent transaction output (UTXO) method, the unspent token is the output of a transaction that has not been referenced as input by any other transaction. For embodiments that use an account based method, unspent tokens are the tokens in the token provider's account. The nodes (S103) pack legitimate transactions received periodically to generate a block; append the block to the tail of local blockchain data, and broadcast it to other nodes in the network (S103) through the Internet (S101). After having received a new block from other nodes (S103), nodes (S103) validate legitimacy of all transactions in the received block. If the validation result inidates that all the transactions are legitimate, the block is appended after the tail of the local blockchain data as the latest block of the blockchain.

Validating legitimacy of a transaction comprises verifying integrity of the transaction.

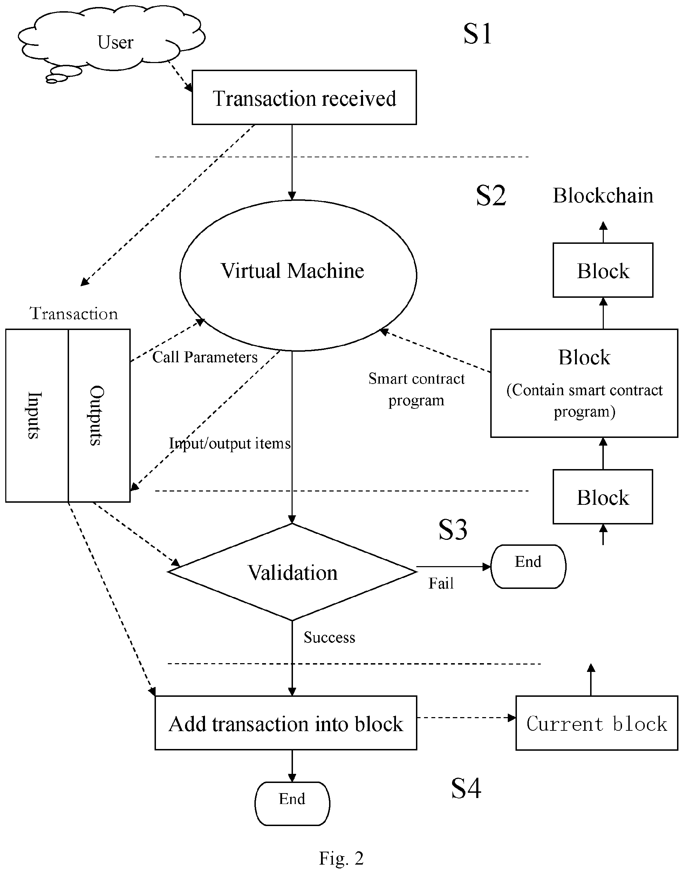

An embodiment of the present invention is a blockchain smart contract method. A smart contract in a blockchain consists of smart contract program (code) and data defining its state stored in blockchain. A user may submit a transaction comprising calls of smart contracts to a node, which is called smart transaction. The smart transaction submitted by the user does not have to be integral, i.e.. total input values and total output values may be different. As shown in FIG. 2, the method consists of the following steps:
S1. A miner (node) accepts a smart transaction submitted by the user. The smart transaction is a transaction comprising call(s) of smart contract(s). The user could be a human or an electronic device connected to the node either locally or through a network. The user's expectations are declared in output items of the smart transaction.
S2. The node executes all call(s) of smart contract(s) in the smart transaction. During execution of the smart contract(s), input item(s) are added to the smart transaction which the smart contract belongs to.
S3. The node validates legitimacy of the smart transaction, including verifying integrity of the smart transaction.
S4. If the smart transaction is legitimate, the miner accepts the smart transaction. To accept the smart transaction means to pack the smart transaction into the current block. If the smart transaction is not legitimate, the miner discards the smart transaction.

Current block is a new block the miner is packing and constructing. The miner broadcasts the current block in the network after finish packing certain number of legitimate transactions (including the normal transactions that comprise no call of smart contract) into the current block and adding it to local blockchain.

Another embodiment of the present invention is a blockchain smart contract method, wherein another node may send a block to a node, the block consists of smart transactions. The method consists of following steps:
S21. A miner (node) accepts a block transmitted by another node. The block consists of smart transaction(s). The block is called current block.
S22. For each smart transaction in the block, the node executes all the call(s) of smart contract(s) in it. User expectations are declared in output items of the smart transaction. During execution of the smart contract, input item(s) are added to the smart transaction which the smart contract belongs to.
S23. The node validates legitimacy of the smart transaction, including verifying integrity of the smart transaction.
S24. If the smart transaction is not legitimate, the miner discards the block.

If all the transactions in the current block are legitimate (including the transactions that contains no call of smart contract), the miner adds the block into local blockchain.

In embodiments of the present invention, anytime when a call of a smart contract returns a failure result, the node discards the smart transaction containing the call. If the smart transaction is in a block transmitted by another node, the node discards the block.

Validating the smart transaction comprises: verifying signatures for the original input items, blocking double spending, and verifying integrity of the smart transaction. Original input items are the input items in the smart transaction submitted by a user, instead of items added to the smart transaction by smart contract. For embodiments of the present invention that use UTXO method, blocking double spending consists of verifying that all input items in the smart transaction (including those added by smart contract) references to outputs of other transactions that have not been used. For embodiments of the present invention that use account based method, blocking double spending consists of verifying that all input items in the smart transaction (including those added by smart contract) do not exceed balance of corresponding accounts. Legitimate transaction must be integral. Verifying integrity of the smart transaction consists of verifying that total input values and total output values are identical after all calls of smart contracts have finished execution, transaction fees taken into consideration when needed.

A transaction consists of inputs and outputs. Each output of a transaction consists of a token and a script. The script consists of an output address. If the output address is a smart contract address, the output item is a call of the smart contract. The script also consists of parameters for the call of the smart contract. A smart transaction is a transaction that consists of output item(s) as call(s) of smart contract(s). A smart transaction may comprise multiple calls of smart contracts and a miner executes the calls of smart contracts sequentially.

During execution of a call of a smart contract, input item(s) and/or output item(s) may be added the present smart transaction which is the smart transaction containing the call of the smart contract, or output item(s) added to the coinbase transaction of the current block. Generally, to avoid executing a call of a smart contract every time when accessing a transaction, the transactions stored in a blockchain contains input and output items added by smart contracts. When transmitting blocks between nodes, because the receiving node will execute calls of smart contracts in the transactions and generating the input and output items added by the smart contracts, to reduce data traffic, a transmitted block contains only the original input and output items, not the input and output items added by smart contracts. Otherwise, if a transmitted block contains input and output items added by smart contracts, to avoid double counting in integrity verification, it would be necessary to strip the input and output items added by smart contract first before executing calls of smart contracts. Therefore, it is necessary to distinguish the original input and output items (submitted by a user) from those added by smart contracts. One method is to add a separation item to the lists of corresponding groups before the first item is added to a list of input or output group of a smart transaction by a smart contract. The items in the list before the separation item are the original input or output items, and those after the separation item are added by smart contract. Another method is to include a flag in each input or output item to indicate whether it is original or added by a smart contract.

A coinbase transaction is the first transaction in a block. The transaction is not submitted by user. It is generated by a node (miner). The transaction has no input, only outputs. It is used to record awards and fees given to miners in prior art. In an embodiment of the present invention, coinbase transactions are used to record new tokens created by smart contracts as well.

In some embodiments of the present invention, a node comprises a virtual machine that can interpret and execute programs of smart contracts. A program of a smart contract is a list of virtual machine instructions. The method that a miner executes a call of a smart contract consists of invoking the virtual machine to interpret and execute the program of the smart contract. Invoking the virtual machine comprises reading the program of the smart contract from a blockchain according to the smart contract address in the call of smart contract to be executed; setting initial state for the virtual machine according to the parameters in the call of the smart contract and the token in the output item of the transaction that the call of the smart contract belongs to; reading an instruction according to the initial state to interpret and execute it. The virtual machine is a program that interprets and executes smart contract instructions. An instruction consists of an instruction code and data. Instruction code defines the function to be executed by the instruction. Therefore, each instruction code represents a type of instructions. All types of instructions a virtual machine can process together constitute the instruction set of the virtual machine.

The virtual machine reads an instruction from the smart contract program, interprets and executes the instruction, then reads the next instruction from the smart contract program according to the resulting state of the virtual machine after interpretation and execution of the instruction. It repeats the process until an execution failure occurs or a terminating instruction is executed. If execution failure occurs, the virtual machine returns an execution failure result to the miner. If a terminating instruction is executed, the virtual machine returns a result of success or failure to the miner according to the virtual machine state at the time of termination or data in the terminating instruction.

During interpretation and execution of smart contract program, the virtual machine may add new input and/or output item(s) to the smart transaction that has caused execution of the program. An embodiment of the present invention is a virtual machine for blockchain smart contracts. The instruction set of the virtual machine consists of a spending instruction. The virtual machine adds an input item to the present transaction when interpreting and executing a spending instruction. Another embodiment of the present invention is a virtual machine for blockchain smart contracts. The instruction set of the virtual machine consists of a delivery instruction. The virtual machine adds a first output item to the present transaction when interpreting and executing a delivery instruction.

Data of the spending instruction consists of data of an input item. The virtual machine verifies that the input item is owned by the smart contract being called when executing the spending instruction. For embodiments that use UTXO method, the input item consists of a reference to an output item of another transaction. To verify that the input item is owned by the smart contract being called comprises verifying that the address in the script of the output item referenced by the input item is the address of the smart contract being called. For embodiments that use account based method, to verify that the input item is owned by the smart contract being called comprises verifying that the input item consists of the address of the smart contract being called and account balance of the smart contract account is not less than the value of the input item. If the result of verification is affirmative, the input item is added to the list of inputs of the present transaction and the instruction is executed successfully.

Data of the delivery instruction consists of data of an output item. The output item consists of a token and a script. The virtual machine validates the token and the script when executing the delivery instruction. If the result of validation is affirmative, the output item as the first output item is added into the list of outputs of the present transaction and the instruction is executed successfully.

In an embodiment of the present invention, the instruction set of the virtual machine consists of a mint instruction. A mint instruction is an instruction that creates a new token. Data of the mint instruction consists of a token. For embodiments that use UTXO method, the virtual machine adds an output item containing the token as a second output item to the list of outputs of the current block's coinbase transaction when executing a mint instruction. In some embodiments of the present invention, the address in the script of the second output item is the address of the smart contract being called. In some other embodiments of the present invention, the data of mint instruction address consists of an address, the address in the script of the second output item is the address in the data. For embodiments that use account based method, the virtual machine adds the token to account balance of the smart contract being called. In some other embodiments of the present invention using account based method, the data of mint instruction consists of an address, the virtual machine adds the token to account balance of the address.

A node validates the transaction after all calls of smart contracts in the transaction are successfully executed. In prior art, validation of the transaction includes verifying signatures, blocking double spending, and verifying that total output does not exceed total input, etc. In the present invention, because the smart contracts may add inputs or outputs to the transaction, the transaction to be validated comprises inputs and outputs added during execution of the smart contracts. Further, there might have multiple types of tokens in the transaction, Thus, validation of legitimacy comprises verifying signatures in inputs of the original transaction, blocking double spending, and verifying integrity of the transaction after all calls of smart contracts have finished execution.

A legitimate transaction must be integral, i.e. total token values of inputs of the transaction is the same as total token values of outputs of the transaction (after taking transaction fee into consideration). Nodes only pack legitimate transactions into a block, add the block into local blockchain and broadcast it to other nodes.

In some embodiments of the present invention, a token is a number.

In some other embodiments of the present invention, data of a token consists of a token type and a token value. A token value may be one of three types below:
a) A number; such as number 5 to represent 5 Bitcoins;
b) A geometric object; such as a polygon to represent a piece of land. Geometric objects in a token are not limited to polygons. It may be a polyhedron, or any geometric entity according to a mathematical definition, such as a globe, a curved surface, etc.
c) A monodromy; a monodromy is identification of an indivisible thing or matter.

In some other embodiments of the present invention, token type is identified by a type tag, e.g. while two tokens are both numerical types but with different type tags, there are still different types and can not add. Similarly, while two tokens are both polygon tokens but with different type tags, the polygons may not be merged.

In some other embodiments of the present invention, a token consists of a right set, thus data of the token consists of a token type tag, a token value and a right set.

In some embodiments of the present invention, UTXO method is used. An input of a transaction consists of a reference to an output item of another transaction. Token in the referenced output item is called input token.

In some other embodiments of the present invention, account based method is used. Input of a transaction consists of a token and an address, and the token therein is called input token.

Usually a blockchain transaction needs to pay transaction fee to miner for compensation. Transaction fee may be paid expressly or implicitly. To pay expressly is to include an output item for the miner. It is to pay implicitly when value of total input of a transaction exceeds value of total output of the transaction, the difference is the transaction fee and is recorded in a coinbase transaction.

If tokens are numbers, transaction integrity verification consists of a step verifying that sum of input tokens equals to sum of output tokens (with transaction fee taken into consideration).

If tokens have types, transaction integrity verification consists of a step verifying that, for each type of tokens, total input tokens equals to total output tokens (with transaction fee taken into consideration). For numerical types of tokens, total means sum of numerical values. For geometric type of tokens, total means merged geometric objects, For monodromy type of tokens, total means the number of each monodromy.

If tokens consist of right sets, transaction integrity verification consists of a step that for each token type, split and merge input tokens and output tokens respectively and verify that the group of input tokens and the group of output tokens consist of the same tokens after splitting and merging.

Take the examples below to illustrate the methods above and to show the difference with Ethereum smart contract method. In these examples, the blockchain uses UTXO method. Providing a smart contract S is deployed. The smart contract accepts a numerical type token A, generates and sends a numerical type token B in the amount 10 times of the amount of token A to the caller. However, due to negligence of the programmer, there is an error in the smart contract. The smart contract uses a byte type variable in calculating the amount of B. Thus, an overflow will occur when the result is greater than 256, and higher bits of data are lost. The smart contract with the error is deployed on a blockchain.

If the smart contract is deployed on Ethereum, code of the smart contract would be like:

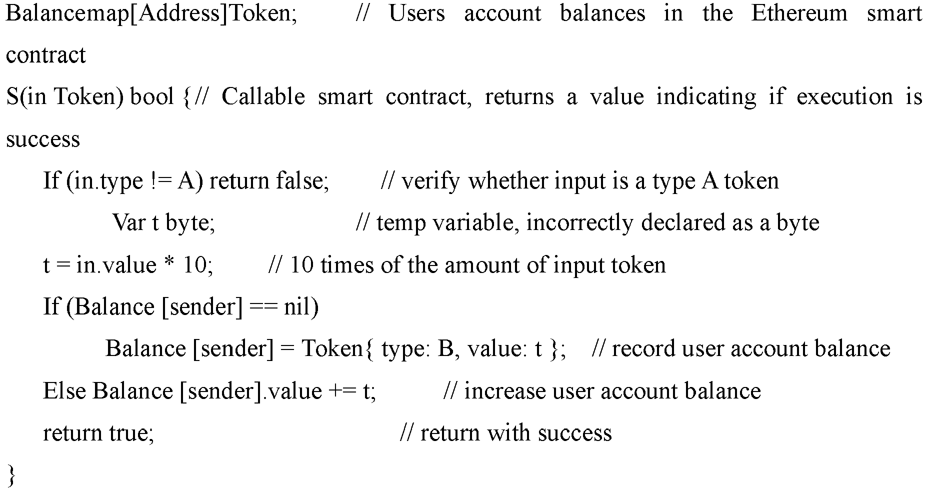

In the prior art smart contract methods, results of smart contract execution are stored in the contract's internal data structure. Specifically in this example, it is a mapping relationship from address to token, i.e. Balance. A programmer may choose a different data structure to represent and store the execution result. Although these data structure are stored in blockchain, nodes can only read and write. Nodes can not understand and process the data, therefore nodes are unable to validate the results. In the prior art smart contract methods, only through the smart contract these data may be understood and processed.

User calls the smart contract by submitting a transaction. Transaction data consists of: user address ('sender' in the code), input token ('in' in the code), user's signature, address of the smart contract (S). When a node receives the transaction, it validates the transaction, including verifying that the signature is indeed by the user of that user address. After successful validation, the node executes the smart contract S. If it returns with success, the node updates state of the smart contract ('Balance' in the code), and pack the transaction into the blockchain.

If input token is a type A token with value not more than 25, the smart contract will correctly credit the caller's account type B token with value 10 times of that value. When the token is a type A token with value more than 25, the smart contract will credit the caller's account a type B token with wrong value. For example, when the smart contract is called with Token {type: A, value : 26}, the value of type B token credited to the caller's account would be 4, instead of 260. Because the smart contract will return a success, this wrong result as internal state of the smart contract will become a legitimate transaction record of blockchain and can not be changed. Thus, the user losses a type B token with value 256.

If this smart contract is deployed on a blockchain based on the present invention, the smart contract would have code like below:

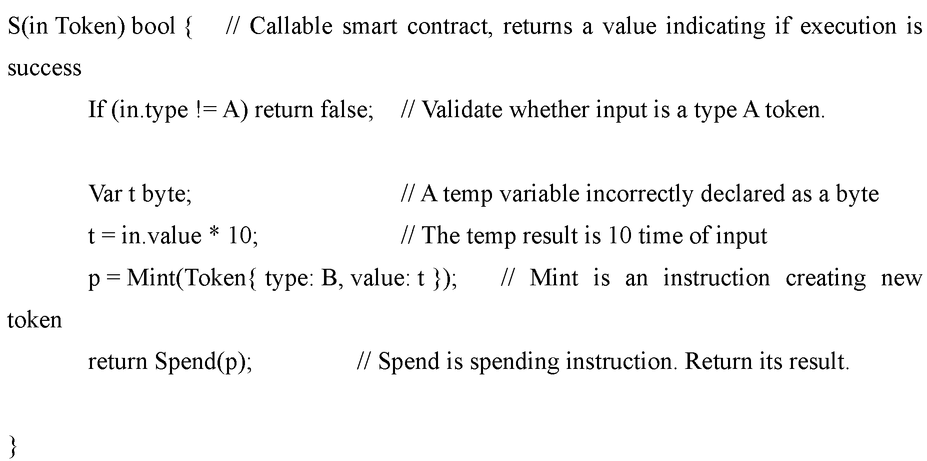

This smart contract contains the same error as the previous one. It returns a success when the error happens as well. Thus, node does not know that there is a bug in the smart contract.

User calls the smart contract by submitting a transaction. Assuming user X owns an unspent transaction output Utxo, its outpoint (an outpoint is a reference to output of a transaction) is U. Utxo comprises a type A token with value 26. The user would like to trade Utxo for a type B token with value 260. This expectation could be expressed by including an output item in the transaction. The token in the output item is a type B token with value 260. Script in the output item is a locking script with the address of user X. The user may initiate a transaction provided that its transaction ID is Tx1. The transaction data comprises inputs and outputs. Output item 1 represents expectation of the user.

| Index | Inputs | Outputs |
|---|---|---|
| 0 | U (outpoint) | Token { type: A, value: 26} (output token) |
| | SigScript ( unlock script containing X's signature) | S (smart contract address) |
| 1 | | Token {type: B, value: 260} (output token) |
| | | Script (locking script with output address X) |

The node verifies whether SigScript can unlock the locking script in Utxo. If verification is successful, the node checks whether there are calls of smart contracts in outputs of the transaction, and if there are, invokes the virtual machine to execute the calls of the smart contracts. Because the script address of the transaction's output item 0 is a smart contract address, the node invokes the virtual machine and calls smart contract S with Token { type: A, value: 26} as parameter to execute the smart contract code above.

When executing mint instruction p = Mint(Token{ type: B, value: t }), the instruction data is a token Token{ type: B, value: t }, where t=4. Thus the virtual machine will add an output item with Token{ type: B, value: 4 } as output token and the smart contract address of S as the locking script to the current coinbase transaction, returning its outpoint as p. In this example, p = {ID of the coinbase transaction, 1}.

When executing spending instruction Spend(p), data of the instruction is p, where p = { ID of the coinbase transaction, 1}. The virtual machine verifies that the address in the locking script of the transaction output referenced by p is the address of current smart contract. If the result is negative, the virtual machine returns a result signaling execution failure. In this example, p is the outpoint that is just added into the current coinbase, the address in its locking script is the address of the current smart contract, thus verification is successful. After successful verification, the virtual machine adds p into inputs of the present transaction and returns a result of execution success. After completion of smart contract execution, new contents of the coinbase transaction is as follows:

| Index | Input | Output |
|---|---|---|
| 0 | | Token (output token for mining award) |
| | | Script (locking script with miner's address as output address) |
| 1 | | Token { type: B, value: 4} (output token) |
| | | S (locking script with address of the present smart contract as output address) |

Contents of transaction Tx1 becomes:

| Index | Input | Output |
|---|---|---|
| 0 | U (outpoint) | Token { type: A, value: 26} (output token) |
| | SigScript ( unlocking script containing signature of X) | S (Address of smart contract) |
| 1 | {coinbase transaction ID , 1 } (outpoint) | Token {type: B, value: 260} (output token) |
| | | Script (locking script with X as output address) |
| | Nil (unlocking script) | |

Because smart contract execution is successful, node further validates the present transaction, including: verifying that all outpoints in the inputs reference unspent transaction outputs, and with respect to each type of tokens, total input is identical to total output. There are two input items in Tx1, they both references unspent transaction outputs. They contain a type A token with value 26 and a type B token with value 4 (due to error in the code). There are two output items in Tx1, they contain a type A token with value 26 and a type B token with value 260. Because total input of type B token is different than the total output of type B token, the node determines that the transaction is not legitimate and will not pack it into blockchain. Therefore, the user suffers no loss.

Comparing the ways and results of the two smart contract executions above, it can be found that using Ethereum smart contract method, users making call of smart contract can not express the result they expect. Results of smart contract execution are stored as internal state of the smart contract in blockchain. Miners are unable to understand and process them. Thus, even if there are errors in a smart contract, as long as smart contract execution does not fail, user can only accept the wrong results.

Using the methods of the present invention, smart contracts do not store the results of execution as internal states in blockchain, instead the results are expressed explicitly by adding inputs/outputs to transactions. Miners can understand and process input and output data of transactions. Therefore, users may express expected results by placing output items in the transaction they submit. In contract law sense, this is an expression of mind. Smart contracts fulfill users' expectation by providing appropriate inputs. Miners verify that the supplied inputs meet the users' expected results. In contract law sense, it is equivalent to verifying that the parties' minds meet. Only successfully validated transactions will be accepted into blockchain. Thus, smart contracts using the methods of the present invention satisfy legal definition of contract better and can reject smart contract execution results that do not meet users' expectation.

A smart contract may call another smart contract. This is called secondary call of smart contract. A call of a smart contract in the transaction submitted by a user is called primary call of the smart contract. When a smart contract is unable to satisfy a user's expectation directly, it may call another smart contract to meet the user's expectation. Secondary call of smart contract may be implemented according to either a prior art method or a smart contract method described in an embodiment of the present invention.

Assuming that the user X owns an unspent transaction output Utxo2. Its outpoint (a reference to transaction output) is U2. Utxo2 contains a type C token with value 52. The user would want to trade Utxo2 for a type B token with value 260. This expectation may be expressed by including an output item comprising a type B token with value 260 and a locking script with user X's address as a script in transaction outputs. The user may initiate a transaction provided that its transaction ID is Tx2. The transaction contains call of smart contract S2. S2 can not create type B token by itself. Thus it can not satisfy the user's expectation by itself. S2, however may accept type C token and exchange it for type A token at 2:1 ratio. Data of user transaction Tx2 includes inputs and outputs as follows. Output item 1 represents user's expectation.

| Index | Input | Output |
|---|---|---|
| 0 | U2 (outpoint) | Token { type: C, value: 52} (output token) |
| | SigScript ( Unlocking script containing X's signature) | S2 (Smart contract address) |
| 1 | | Token { type: B, value: 260} (output token) |
| | | Script (locking for X's address) |

After all calls of smart contracts are executed Tx2 becomes:

| Index | Input | Output |
|---|---|---|
| 0 | U2 (outpoint) | Token { type: C, value: 52} (output token) |
| | SigScript ( Unlocking script containing X's signature) | S2 (Smart contract address) |
| 1 | U3 (outpoint) ( reference to a transaction belonging to S2 and containing 26 type B token) | Token { type: B, value: 260} (output token) |
| | | Script (locking script with output address X) |
| 2 | {coinbase transaction ID , 1}( outpoint) | Token { type: B, value: 26} (output token) |
| | | S (smart contract address) |
| | Nil (unlocking script) | |

During execution of S2, input 1 and output 2 are added to transaction Tx2. During execution of S, input 2 is added to transaction Tx2. If there were the same error in S as the previous example, according to the method of the present invention, node would find when validating the transaction that for type B tokens, total input is 4 and total output is 260. Therefore, the transaction is ruled not legitimate, while according to prior art method, the incorrect transaction would be accepted. This illustrates that comparing to prior art, using the smart contract methods of the present invention, developers may achieve better quality code with less or the same efforts. If S and S2 are developed by different developers, the developer of S2 does not have to be concerned about security of S too much. They may focus attention primarily on improving quality of the smart contract of their own (S2). If there were security flaw in S and unable to meet user expectation, the transaction would not be accepted, therefore no harm would be done to user. A developer using prior art method, however, must pay attention to security of S, otherwise it would bring security risks to his users. Because smart contract programs stored in blockchain are codes similar to machine language, instead of programs in high level language, it is difficult for developer to understand and more difficult to find out problems therein. Significant efforts must be spent by a developer to understand and find out problems therein, while such efforts could have been spent on improving quality of the developer's own smart contracts.

Since a smart contract may call other smart contracts, it would effectively reduce total storage required for smart contracts and improve development effectiveness by creating a repository of common and shared smart contracts in blockchain. Permitting called smart contracts to collect fees would incentivize smart contract developers to develop more callable smart contracts thereby enriching smart contract ecology. Assuming there are three smart contracts X, Y, Z in smart contract repository called by smart contract S. X, Y, Z requires types D, E, F tokens for compensations respectively. According to the prior art methods, S may use one of the two methods below:
1. S keeps a reserve of type D, E, F tokens and pays to X, Y, X when calling them. When reserve is low, the contract might fail to execute in the future. Owner of S needs to resupply type D, E, F tokens to S. Generally, it requires human intervention.
2. S requires the user to pay type D, E, F tokens at the time of calling. According to the prior art methods, there could be only one caller, thus the caller must own type D, E, F tokens. If any required token is missing, the user may not call S.

Therefore, prior art is either inconvenient for smart contract owners due to requiring a reserve of third party tokens or inconvenient for users due to increasing difficulty of transaction.

Using the methods of the present invention, smart contracts don not need to maintain reserves of third party tokens. A smart contract may call other smart contracts. The invoked smart contract in secondary call of smart contract may add an output item to the smart transaction. It collects fees by making the smart contract address the output address of the output item. The calling smart contract does not know and need not to know this act. The user initiating the transaction either supplies the required inputs or arranges someone else to provide the required inputs. The example below illustrates a transaction a user may construct according to the methods of the present invention. Assuming the user call smart contract S to trade type A token with value for a type B token with value 260. S would call X, Y, Z. X, Y, Z each require type D, E, F token with value 3 respectively for compensation. The user owns a type A token with value 27 and a type D token with value 3. The user's friend G will provide a type E token with value 3. The user may trade a type A token with value 1 for a type F token with value 3 through smart contract W. The user may construct transaction Tx3 as below to complete everything above.

The initial contents of Tx3 are:

| Index | Input | Output |
|---|---|---|
| 0 | V (outpoint) | Token { type: A, value: 26} (output token) |
| | SigScript ( unlocking script containing the user's signature) | S (smart contract address) |
| 1 | M (outpoint) | Token { type: B, value: 260} (output token) |
| | SigScript ( unlocking script containing the user's signature) | Script (locking script with the user as output address) |
| 2 | N (outpoint) | Token { type: A, value: 1} (output token) |
| | SigScript ( unlocking script containing signature of G) | W (smart contract address) |

The transaction output referenced by V comprises a type A token with value 27. The transaction output referenced by M comprises a type D token with value 3. The transaction output referenced by N comprises a type E token with value 3. Thus the inputs of the initial transaction comprise A, D, E tokens with values 27, 3, and 3 respectively.

After successful execution of smart contract S and smart contract W, new contents of the transaction are:

| Index | Input | Output |
|---|---|---|
| 0 | V (outpoint) | Token { type: A, value: 26} (output token) |
| | SigScript ( unlocking script containing the user's signature) | S (smart contract address) |
| 1 | M (outpoint) | Token { type: B, value: 260} (output token) |
| | SigScript ( unlocking script containing the user's signature) | Script (locking script with the user as output address) |
| 2 | N (outpoint) | Token { type: A, value: 1} (output token) |
| | SigScript ( unlocking script containing signature of G) | W (smart contract address) |
| 3 | {coinbase transaction ID , 1}( outpoint) | Token { type: D, value: 3} (output token) |
| | | X (smart contract address, no parameter) |
| | Nil (unlocking script) | |
| 4 | K (outpoint) | Token { type: E, value: 3} (output token) |
| | Nil (unlocking script) | Y (smart contract address, no parameter) |
| 5 | | Token { type: F, value: 3} (output token) |
| | | Z (smart contract address, no parameter) |

Same as the previous embodiment, during execution of S, a mint instruction is executed and an output item comprising a B token with value 260 is added to the coinbase transaction. S spends this newly created token by adding input 3 referencing this output item to the transaction. S calls X, Y, Z (with parameters) also. X, Y, Z treat the calls as using functionalities they provide and requires compensation by executing delivery instructions and adding output items 3, 4, 5 to the transaction respectively. In items 3, 4, 5, the calls of smart contracts have no parameter. Thus when X, Y, Z are called second time, X, Y, Z do not perform any operation and return success result immediately.

Smart contract W accepts a type A token with value 1, adds input item 4 to the transaction, where K references an output item of a previous transaction comprising a type F token with value 3 as output token of and W as output address.

Because all smart contracts execute successfully, the node further verifies integrity of the transaction, including: verifying that all outpoints in input items reference unspent transaction outputs, and that for every token type, total input is identical to total output. The final transaction has four input items. If any of them had been spent, a miner would rule the transaction not legitimate thereby preventing double spending by smart contract. If all of them were unspent transaction outputs, the miner would further verify whether total input is identical to total output for every type token. If not, the miner would rule the transaction not legitimate thereby preventing over spending by smart contract (i.e., spend more assets than what is owned). In the present embodiment, values of input tokens in the final transaction are: 27 A, 3 D, 3 E, 260 B, 3 F, which are identical to what are in outputs. The transaction is legitimate.

Sophisticated operations like this can be completed in one transaction according to the methods of the present invention. While according to prior art methods, multiple transactions are need for the same effect. Therefore, methods of the present invention are more user friendly and more convenient.

An embodiment of the present invention is a blockchain system. As illustrated in Fig. 1, the system consists of plural number of nodes and plural number of terminals connected through a network. A terminal is configured to transmit a smart transaction to a node. A node is configured to transmit a block to other nodes. The nodes are configured to perform a blockchain smart contract method according the methods described above after having received a smart transaction or a block,.

An embodiment of the present invention is an electronic device. The electronic device consists of a storage device, a processor, and a computer program stored in the storage device and executable by the processor. The electronic device is configured such that a method described above is implemented when the processor executes the program.

An embodiment of the present invention is a computer-readable storage medium. The computer-readable storage medium stores a program implementing a method described above when the program is executed by a processor.

As should be appreciated by technicians in the field, the embodiments of the present invention may be provided as a method, a system, or a computer program product. Accordingly, the present invention may take the form of an entirely hardware embodiment, an entirely software embodiment, or an embodiment combining software and hardware aspects. Furthermore, the present application may take the form of a computer program product embodied on one or more computer-usable storage media (including but not limited to disk storage, CD-ROM, optical storage, etc.) having computer-usable program code embodied therein.

The present invention is described in terms of methods, apparatus (systems), and flow description of computer program products (including flow diagrams, block diagrams, and text descriptions) according to embodiments of the present application. It shall be construed that each step in the flows can be implemented by computer program instructions. These computer program instructions may be provided for a general purpose computer, special purpose computer, embedded processor or other programmable data processing device to produce a machine for implementing the functions specified in one or more steps by execution of a processor of a computer or other programmable data processing device. These computer program instructions may also be stored in a computer-readable storage device that can instruct a computer or other programmable data processing device to work in a specific way allowing a series of operational steps to be performed on the computer or the programmable device to produce a computer-implemented process for implementation of the functions specified in one or more steps described above.

These computer program instructions may also be loaded into a computer or other programmable data processing device such that a computer process is implemented when a series operational steps are executed on the computer or the other programmable data processing device, thereby providing one or more functions specified in the flow on the computer or other programmable data processing device
The descriptions above are only some selected embodiments of the present invention. They do not mean to restrict scope of the present invention. For a technician in the field, variations and modifications of the embodiments of the present invention exist. Any modification, replacements by equivalents, and improvements within the scope of the spirits and principles of the prevent invention are protected within the scope of the present invention.

As should be appreciated by technicians in the field, the embodiments of the present invention may be provided as a method, a system, or a computer program product. Accordingly, the present invention may take the form of an entirely hardware embodiment, an entirely software embodiment, or an embodiment combining software and hardware aspects. Furthermore, the present application may take the form of a computer program product embodied on one or more computer-usable storage media (including but not limited to disk storage, CD-ROM, optical storage, etc.) having computer-usable program code embodied therein.

The present invention is described in terms of methods, apparatus (systems), and flow description of computer program products (including flow diagrams, block diagrams, and text descriptions) according to embodiments of the present application. It shall be construed that each step in the flows can be implemented by computer program instructions. These computer program instructions may be provided for a general purpose computer, special purpose computer, embedded processor or other programmable data processing device to produce a machine for implementing the functions specified in one or more steps by execution of a processor of a computer or other programmable data processing device.

These computer program instructions may also be loaded into a computer or other programmable data processing device such that a computer process is implemented when a series operational steps are executed on the computer or the other programmable data processing device, thereby providing one or more functions specified in the flow on the computer or other programmable data processing device
Finally, it should be noted that the embodiments described above are only used to illustrate the technical solutions of the present invention instead of limiting them. Although the detailed description of the present invention is described with reference to the above embodiments, technicians of the field should understand that the specific embodiments of the present invention can still be modified or equivalently replaced within the scope of the present invention and they shall fall within the scope of the claims of the present invention

## Claims

1. A blockchain smart contract method, comprising the following steps:
S1. a first node receiving a first smart transaction submitted by a user or a block transmitted by a second node, wherein the block comprises smart transactions;
S2. the first node executing all calls of smart contracts in a second smart transaction; the execution further comprising a step for adding an input item to the second smart transaction;
S3. the first node validating legitimacy of the second smart transaction, which involves verifying integrity of the second smart transaction after completion of execution of all the calls of the smart contracts; and
S4. accepting the second smart transaction under the circumstance that a validation result indicates the second smart transaction is legitimate; rejecting the second smart transaction otherwise;
wherein the second smart transaction is a transaction consisting of at least one call of at least one smart contract, and a user expectation can be specified in an output item of the second smart transaction;
under the circumstance that the second smart transaction is the first smart transaction submitted by the user, accepting the second smart transaction means to pack the second smart transaction into a current block, while rejecting the second smart transaction means to discard the second smart transaction; and
under the circumstance that the second smart transaction is a transaction in the block transmitted by the second node, rejecting the second smart transaction means not to add the block into a blockchain.

2. The blockchain smart contract method of claim 1, wherein said first node invokes a virtual machine to interpret and execute programs of said smart contracts and an instruction set of the virtual machine consists of a spending instruction; the method for interpreting and executing the spending instruction by the virtual machine comprising: adding an input item to a list of inputs of said second smart transaction.

3. The blockchain smart contract method of claim 2, wherein said instruction set of said virtual machine consists of at least one of instructions below: delivery instruction and mint instruction;
the method for interpreting and executing said delivery instruction by said virtual machine comprising: adding a first output item to a list of outputs of said second smart transaction, and
the method for interpreting and executing said mint instruction by said virtual machine comprising: adding a second output item to a list of outputs of a coinbase transaction of a current block.

4. The blockchain smart contract method of claim 3, wherein a script in said first output item or said second output item is a call of a smart contract.

5. The blockchain smart contract method of claim 3, during execution of said delivery instruction, said virtual machine adding an output item contained in data of said delivery instruction to said list of outputs of said second smart transaction.

6. The blockchain smart contract method of claim 3, wherein in execution of said mint instruction by said virtual machine, said second output item consists of a token contained in data of said mint instruction.

7. The blockchain smart contract method of claim 2, the method of executing said spending instruction by said virtual machine comprising the following steps:
said virtual machine verifying that an input item is owned by said second smart contract, wherein the input item is contained in data of said spending instruction; and only under the circumstance that a result of the verification is affirmative, adding the input item to said list of inputs of said second smart transaction.

8. A blockchain system comprising a plural number of nodes and a plural number of terminals; a terminal is configured to transmit a smart transaction to one of said nodes; a node is configured to transmit a block to another of said nodes; said nodes are configured to perform a blockchain smart contract method according to any one of claims 1-7 when receiving a smart transaction or a block.

9. An electronic device comprising a storage device, a processor and a computer program stored in said storage device and executable by said processor; said electronic device is configured such that when said processor executes said program, implementing a blockchain smart contract method according to any one of claims 1-7.

10. A computer-readable storage medium in which a computer program is stored, when said computer program is executed by a processor, implementing a blockchain smart contract method according to any one of claims 1-7.
